(19) Europäisches Patentamt / European Patent Office / Office européen des brevets

(11) EP 4 007 036 A1

(12) **EUROPEAN PATENT APPLICATION**
published in accordance with Art. 153(4) EPC

(43) Date of publication:
**01.06.2022 Bulletin 2022/22**

(21) Application number: **20855025.1**

(22) Date of filing: **14.08.2020**

(51) International Patent Classification (IPC):
***H01M 10/42*** *(2006.01)*

(52) Cooperative Patent Classification (CPC):
**H01M 10/052; H01M 10/42; H01M 50/40; H01M 50/409;** Y02E 60/10

(86) International application number:
**PCT/KR2020/010922**

(87) International publication number:
**WO 2021/034061 (25.02.2021 Gazette 2021/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.08.2019 KR 20190100504**

(71) Applicant: **LG ENERGY SOLUTION, LTD.**
**Seoul 07335 (KR)**

(72) Inventors:
- **JEONG, So-Mi**
**Daejeon 34122 (KR)**
- **KIM, Min-Ji**
**Daejeon 34122 (KR)**
- **HAN, Da-Kyung**
**Daejeon 34122 (KR)**

(74) Representative: **Hoffmann Eitle**
**Patent- und Rechtsanwälte PartmbB**
**Arabellastraße 30**
**81925 München (DE)**

# (54) SEPARATOR, FOR ELECTROCHEMICAL DEVICE, COMPRISING HEAT-RESISTANT LAYER AND SECONDARY BATTERY COMPRISING SAME

(57) Provided is a method for manufacturing a separator including a heat resistant layer containing a ceramic material, wherein the ceramic material is derived from a ceramic precursor. The method for manufacturing a separator shows high convenience of processing, since the ceramic precursor can be converted into an inorganic material at a temperature lower than the melting point of the binder. In addition, the separator obtained by the method for manufacturing a separator includes a heat resistant layer in which inorganic particles are not localized, locally distributed or agglomerated and the ceramic material converted from the ceramic precursor is distributed homogeneously throughout the whole heat resistant layer. Further, there is no limitation in thickness of the heat resistant layer resulting from the particle size of the inorganic particles, and thus it is possible to form the heat resistant layer in the form of a thin film with ease. Therefore, the separator obtained by the method shows improved resistance characteristics and heat resistance by virtue of the above-mentioned features.

FIG. 1

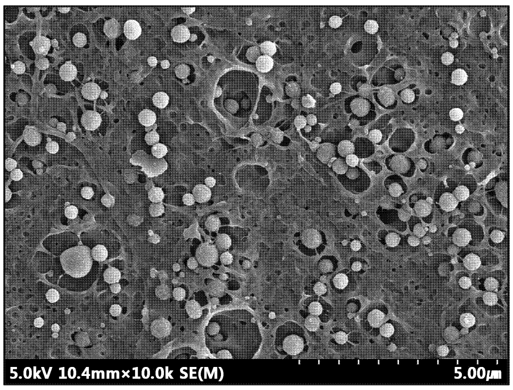


EP 4 007 036 A1

## Description

### TECHNICAL FIELD

The present application claims priority to Korean Patent Application No. 10-2019-0100504 filed on August 16, 2019 in the Republic of Korea, the disclosures of which are incorporated herein by reference. The present disclosure relates to a separator for an electrochemical device having improved heat resistance and stability. The electrochemical device may be a primary battery or a secondary battery, and the secondary battery includes a lithium ion secondary battery.

### BACKGROUND ART

Recently, energy storage technology has been given an increasing attention. Efforts into research and development of electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte. However, such lithium ion batteries have a safety-related problem, such as ignition and explosion, caused by the use of an organic electrolyte and require a complicated manufacturing process undesirably. More recently, lithium ion polymer batteries have improved the above-mentioned disadvantages of lithium ion batteries, and thus have been regarded as one of the next-generation batteries. However, such lithium ion polymer batteries have relatively lower capacity as compared to lithium ion batteries, and particularly show insufficient discharge capacity at low temperature. Therefore, there is an imminent need for solving the above-mentioned problem.

Although such electrochemical devices have been produced from many production companies, safety characteristics thereof show different signs. Evaluation and securement of safety of such electrochemical devices are very important. The most important consideration is that electrochemical devices should not damage users upon their malfunction. For this purpose, safety standards strictly control ignition and smoke emission in electrochemical devices. With regard to safety characteristics of electrochemical devices, there is great concern about explosion when an electrochemical device is overheated to cause thermal runaway or perforation of a separator. Particularly, a polyolefin-based porous polymer substrate used conventionally as a separator for an electrochemical device shows a severe heat shrinking behavior at a temperature of 130°C or higher due to its material property and a characteristic during its manufacturing process, including orientation, thereby causing a short-circuit between a positive electrode and a negative electrode.

To solve the above-mentioned safety problem of electrochemical devices, there has been suggested a separator having a porous composite coating layer by coating a mixture of inorganic particles with a binder polymer on at least one surface of a sheet (substrate) for a porous separator. The inorganic particles contained in the coating layer have higher heat resistance as compared to polymeric materials. Therefore, an effect of preventing a short-circuit between a positive electrode and a negative electrode was obtained, even when an electrochemical device is overheated, unlike a separator including a substrate using a polymeric material alone. However, the inorganic particles introduced to the coating layer are problematic in that they are not dispersed homogeneously but are agglomerated in the slurry during the preparation of the slurry for forming a coating layer. In addition, there is problem in that the inorganic particles are precipitated and concentrated at a specific portion in the coating layer, upon drying after the application. To solve the above-mentioned problems, a method for improving the dispersibility of inorganic particles has been suggested, but there is another problem of degradation of convenience of processing. Therefore, there is a need for a novel method for introducing inorganic particles to a separator.

### DISCLOSURE

#### Technical Problem

The present disclosure is designed to solve the problems of the related art, and therefore the present disclosure is directed to providing a method for manufacturing a separator including a heat resistant layer. The method for manufacturing a separator according to the present disclosure is intended to allow inorganic particles to show a homogeneous dispersed phase, while not causing localization in a heat resistant layer or aggregation of particles. It will be easily understood that the objects and advantages of the present disclosure may be realized by the means shown in the

appended claims and combinations thereof.

Technical Solution

According to the first embodiment of the present disclosure, there is provided a method for manufacturing a separator for an electrochemical device including a heat resistant layer, wherein the heat resistant layer is formed by applying slurry containing a ceramic precursor and a binder resin to at least one surface of a support member, followed by drying, and a pore forming process including at least one step selected from a step of allowing the support member coated with the slurry to stand under a humidified condition and a step of dipping the support member coated with the slurry in a non-solvent is carried out, before drying.

According to the second embodiment of the present disclosure, there is provided the method for manufacturing a separator for an electrochemical device as defined in the first embodiment, wherein the ceramic precursor includes at least one selected from polysilazane, polycarbosilane, polysiloxane, aluminum amide, polyborazine and polytitanium imide.

According to the third embodiment of the present disclosure, there is provided the method for manufacturing a separator for an electrochemical device as defined in the first or the second embodiment, wherein the ceramic precursor includes polysilazane, and the polysilazane includes at least one compound represented by the following Chemical Formula 1:

[Chemical Formula 1]

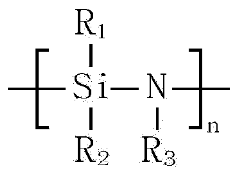

wherein each of $R_1$, $R_2$ and $R_3$ independently represents hydrogen, an alkyl group, alkenyl group, cycloalkyl group, aryl group, alkylsilyl group, alkylamino group, alkoxy group or a halogen.

According to the fourth embodiment of the present disclosure, there is provided the method for manufacturing a separator for an electrochemical device as defined in any one of the first to the third embodiments, wherein the binder resin includes a polyvinylidene fluoride-based polymer resin containing vinylidene fluoride as a polymerization unit.

According to the fifth embodiment of the present disclosure, there is provided the method for manufacturing a separator for an electrochemical device as defined in any one of the first to the fourth embodiments, wherein the slurry is prepared by preparing a polymer solution containing a binder resin and a precursor solution containing a ceramic precursor separately, and mixing the solutions with each other.

According to the sixth embodiment of the present disclosure, there is provided the method for manufacturing a separator for an electrochemical device as defined in any one of the first to the fifth embodiments, wherein the polyvinylidene fluoride-based polymer resin has a weight average molecular weight of 300,000-1,500,000.

According to the seventh embodiment of the present disclosure, there is provided the method for manufacturing a separator for an electrochemical device as defined in any one of the first to the sixth embodiments, wherein the polyvinylidene fluoride-based polymer resin includes a copolymer of vinylidene fluoride with a copolymerizable monomer, and the copolymer has a substitution degree with the monomer of 1-30 wt%.

According to the eighth embodiment of the present disclosure, there is provided the method for manufacturing a separator for an electrochemical device as defined in any one of the first to the seventh embodiments, wherein the content of the ceramic precursor in the slurry is 10-85 wt% based on 100 wt% of the combined weight of the ceramic precursor and the binder resin.

According to the ninth embodiment of the present disclosure, there is provided the method for manufacturing a separator for an electrochemical device as defined in any one of the first to the eighth embodiments, wherein the step of allowing the support member coated with the slurry to stand under a humidified condition is carried out under a relative humidity of 30-60%.

According to the tenth embodiment of the present disclosure, there is provided the method for manufacturing a separator for an electrochemical device as defined in any one of the first to the ninth embodiments, wherein the non-solvent includes at least one selected from water, isopropyl alcohol, methyl alcohol and ethyl alcohol.

According to the eleventh embodiment of the present disclosure, there is provided the method for manufacturing a separator for an electrochemical device as defined in any one of the first to the tenth embodiments, wherein the separator is further subjected to an additional step, such as a UV irradiation step and/or a plasma treatment step, after

drying.

According to the twelfth embodiment of the present disclosure, there is provided a separator for an electrochemical device including a heat resistant layer, wherein the heat resistant layer includes a mixture of a ceramic material with a binder resin, the ceramic material is derived from a ceramic precursor, and the ceramic precursor includes polysilazane.

## Advantageous Effects

The method for manufacturing a separator according to the present disclosure shows high convenience of processing, since the ceramic precursor can be converted into an inorganic material at a temperature lower than the melting point of the binder. In addition, the separator obtained by the method for manufacturing a separator according to the present disclosure includes a heat resistant layer in which inorganic particles are not localized, locally distributed or agglomerated and the ceramic material converted from the ceramic precursor is distributed homogeneously throughout the whole heat resistant layer. Further, there is no limitation in thickness of the heat resistant layer resulting from the particle size of the inorganic particles, and thus it is possible to form the heat resistant layer in the form of a thin film with ease. Therefore, the separator obtained by the method shows improved resistance characteristics and heat resistance by virtue of the above-mentioned features.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 illustrates a scanning electron microscopic (SEM) image of the separator according to Example 1.

FIG. 2 and FIG. 3 illustrate the results of energy dispersive spectrometry (EDS) of the separator according to Example 1.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes an element' does not preclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Specific terms used in the following description are for illustrative purposes and are not limiting. Such terms as 'right', 'left', 'top surface' and 'bottom surface' show the directions in the drawings to which they are referred. Such terms as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

The present disclosure relates to a method for manufacturing a separator for an electrochemical device. The present disclosure also relates to a separator obtained by the method and an electrochemical device including the same. According to the present disclosure, the electrochemical device means a device converting chemical energy into electrical energy by electrochemical reactions, and has a concept covering a primary battery and a secondary battery. In addition, the secondary battery is a rechargeable battery, and has a concept covering a lithium ion battery, nickel-cadmium battery, nickel-metal hydride battery, or the like.

According to an embodiment of the present disclosure, the separator includes a heat resistant layer. The heat resistant layer includes a mixture of a ceramic material with a binder resin, and the ceramic material includes a material derived from a ceramic precursor. According to an embodiment of the present disclosure, the separator may include a heat resistant layer alone, or may have a multilayer structure including at least one layer other than the heat resistant layer without adversely affecting the objects of the present disclosure. According to an embodiment of the present disclosure, the separator may include at lease one heat resistant layer and at least one shut-down layer, and may have a structure in which the heat resistant layer and the shut-down layer are stacked alternately. For example, the heat resistant layer may be provided on at least one surface or both surfaces of the shut-down layer. Herein, the shut-down layer may include a thermoplastic resin and may be provided in the form of a porous polymer film.

According to an embodiment of the present disclosure, the ceramic material is derived from a ceramic precursor and may have a structure of Si-O, Si-O-C, SiC, $Si_3N_4$, AlN, BN or TiN in its chemical structure.

According to an embodiment of the present disclosure, the ceramic precursor may include at least one of polysilazane, polycarbosilane, polysiloxane, aluminum amide, polyborazine and polytitanium imide. Preferably, the ceramic precursor may include polysilazane.

According to an embodiment of the present disclosure, the heat resistant layer may have a thickness of about 1-50 $\mu$m. The thickness may be controlled suitably depending on the shape of a separator. According to an embodiment of the present disclosure, when the separator is a free-standing type separator including a heat resistant layer alone, the heat resistant layer preferably has a thickness of about 10 $\mu$m or more within the above-defined range. In addition, the separator has a porous structure and may have a porosity of about 30-70%. A porosity of 30% or more is advantageous to lithium ion permeability. In addition, a porosity of 80% or less is suitable for ensuring adhesion between a separator and an electrode, because the surface opening ratio is not excessively high in this case.

Meanwhile, according to the present disclosure, porosity and pore size may be determined by using BELSORP (BET system) available from BEL JAPAN Co. with an adsorption gas, such as nitrogen, or by using mercury intrusion porosimetry, capillary flow porosimetry, or the like. According to another embodiment of the present disclosure, the porosity of the porous coating layer may be calculated from the thickness and weight of the resultant coating layer and the theoretical density of the coating layer.

Hereinafter, a method for forming a heat resistant layer will be explained.

First, slurry for a heat resistant layer including a binder resin and a ceramic precursor is prepared. According to an embodiment of the present disclosure, the ceramic precursor may be used in an amount of 10-85 wt% based on 100 wt% of the combined weight of the binder resin and the ceramic precursor. Meanwhile, the slurry has a solid content of about 10-30 wt%, except the solvent (first solvent and second solvent). When the ceramic precursor is used in an amount smaller than the above-defined range, the amount of the ceramic material contained in the heat resistant layer is too small to ensure thermal stability. In addition, in the case of a separator including the heat resistant layer alone, porosity is increased due to the phase separation of the binder resin, thereby making it difficult to ensure insulation property. Meanwhile, when the amount of the ceramic precursor is excessively large, the content of the binder resin participating in the phase separation in the step as described hereinafter is decreased, thereby making it difficult to ensure suitable porosity and providing poor resistance characteristics. In addition, in this case, since the amount of the binder resin is not sufficient to fix the ceramic in the separator, the separator may show poor shape stability.

The slurry for a heat resistant layer may be prepared by preparing a polymer solution containing a binder resin and a precursor solution containing a ceramic precursor separately, and mixing the solutions with each other.

The polymer solution may be prepared by mixing a binder resin with a first solvent. For example, the polymer solution may be prepared by mixing the binder resin with the first solvent and agitating the resultant mixture at about 60°C for about 3 hours by using a homodisper or the like. According to an embodiment of the present disclosure, the binder resin includes a polyvinylidene fluoride-based resin (PVdF-based polymer resin) including vinylidene fluoride as a polymerization unit. The PVdF-based polymer resin is used preferably in an amount of 60 wt% or more, 80 wt% or more, or 90 wt% or more, based on 100 wt% of the binder resin. The PVdF-based polymer resin has a weight average molecular weight of 300,000-1,500,000. When the weight average molecular weight is less than 300,000, the binder resin provides insufficient binding force. When the weight average molecular weight is larger than 1,500,000, the binder resin has low solubility to the solvent and the slurry has high viscosity, thereby making it difficult to control a coating process. Herein, the weight average molecular weight of the PVdF-based polymer resin may be obtained by gel permeation chromatography (GPC). The molecular weight may be expressed in the unit of g/mol.

According to an embodiment of the present disclosure, the vinylidene fluoride-based binder resin may include at least one of vinylidene fluoride homopolymer (i.e. polyvinylidene fluoride), copolymer of vinylidene fluoride with a copolymerizable monomer, and a mixture thereof. According to an embodiment, the vinylidene fluoride-based binder resin may be a copolymer of vinylidene fluoride with a copolymerizable monomer. Preferably, the copolymer may have a degree of substitution with the monomer of 1-30 wt%. When the content of the substituent is larger than 30 wt%, phase separation of the binder resin cannot be performed with ease, which is disadvantageous to formation of pores in the coating layer. In addition, in this case, the binder resin has a low melting point (Tm) to cause degradation of the heat

resistance of the coating layer. According to an embodiment of the present disclosure, the substitution degree with the monomer may be determined through $^1$H-NMR by using Varian 500 MHz. According to an embodiment of the present disclosure, particular examples of the monomer include fluorinated monomers and/or chlorinated monomers. Non-limiting examples of the fluorinated monomers include at least one selected from: vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether, such as perfluoro(methylvinyl)ether (PMVE), perfluoro(ethylvinyl)ether (PEVE) or perfluoro(propylvinyl)ether (PPVE); perfluoro(1,3-dioxole); perfluoro(2,2-dimethyl-1,3-dioxol) (PDD); or the like, and at least one of such fluorinated monomers may be used. According to an embodiment of the present disclosure, the vinylidene fluoride-based binder resin preferably includes PVdF-HFP.

The vinylidene fluoride-based binder resin functions to form pores in the heat resistant layer through humidified phase separation and/or dipping phase separation during the formation of the heat resistant layer as described hereinafter. The vinylidene fluoride-based binder resin also functions to provide the heat resistant layer with flexibility and adhesion to an electrode.

Meanwhile, the binder resin may further include a (meth)acrylate polymer resin, besides the vinylidene fluoride-based binder resin, considering improvement of adhesion. The (meth)acrylic polymer includes (meth)acrylate as a monomer, and non-limiting examples of the (meth)acrylic polymer include those including, as a monomer, butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-octyl (meth)acrylate, isooctyl (meth)acrylate, isononyl (meth)acrylate, lauryl (meth)acrylate, tetradecyl (meth)acrylate, or the like. The (meth)acrylic polymer may be used in an amount of 40 wt% or less, or 20 wt% or less, based on 100 wt% of the total binder resins.

The first solvent is not particularly limited, as long as it is an ingredient capable of dissolving the vinylidene fluoride-based resin. For example, the first solvent may be selected suitably from acetone, methyl ethyl ketone, N-methyl pyrrolidone, polar amide solvent, such as dimethyl acetamide, or dimethyl formamide, or the like, and at least one of such solvents may be used.

The precursor solution may be prepared by mixing a ceramic precursor with a second solvent.

According to the present disclosure, particular examples of the ceramic precursor include polysilazane, polycarbosilane, polysiloxane, aluminum amide, polyborazine and polytitanium imide, and at least one of them may be used. According to an embodiment of the present disclosure, the ceramic precursor may include polysilazane. Polysilazane may be converted into an inorganic material, which is a ceramic material, by allowing it to be in contact with water. Therefore, a high-temperature conditions is not required and the binder resin is not molten during the process, thereby providing high convenience of processing. Polysilazane includes Si-N binding in the ceramic precursor, and may include at least one of organic polysilazanes and inorganic polysilazanes.

According to an embodiment of the present disclosure, polysilazane may include at least one compound represented by the following Chemical Formula 1.

[Chemical Formula 1]

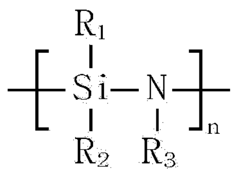

wherein n represents a degree of polymerization and is a number of 1 or more. In addition, within the scope of the present disclosure, each of $R_1$, $R_2$ and $R_3$ may independently represent hydrogen, an alkyl group, alkenyl group, cycloalkyl group, aryl group, alkylsilyl group, alkylamino group, alkoxy group or a halogen.

According to the present disclosure, particular examples of the second solvent include at least one of (a) aromatic compounds, such as benzene, toluene, xylene, ethylbenzene, diethylbenzene, trimethylbenzene, triethylbenzene, or the like, (b) saturated hydrocarbon compounds, such as n-pentane, i-pentane, n-hexane, i-hexane, n-heptane, i-heptane, n-octane, i-octane, n-nonane, i-nonane, n-decane, i-decane, or the like, (c) alicyclic hydrocarbon compounds, such as ethyl cyclohexane, methyl cyclohexane, cyclohexane, cyclohexene, p-menthane, decahydronaphthalene, dipentene, limonene, or the like, (d) ethers, such as dipropyl ether, dibutyl ether, diethyl ether, methyl tert-butyl ether, anisole, or the like, and (e) ketones, such as methyl isobutyl ketone, or the like, and at least one of them may be used. According to the present disclosure, when using a solvent, such as acetone, having a high water content as the second solvent, the ceramic precursor may react with water in the precursor solution or in the slurry for a heat resistant layer, undesirably. Therefore, it is preferred to use the above-described solvents including no water or having a low water content as the second solvent.

After preparing the polymer solution and the precursor solution as described above, the solutions are mixed with each other to prepare slurry for a heat resistant layer. The slurry for a heat resistant layer prepared as described above includes no particle-type inorganic material. Therefore, a dispersing agent for assisting dispersion of inorganic particles may not be added and a milling step may not be carried out.

Next, the slurry prepared as described above is applied to a support member, such as a release sheet or another separator substrate layer, and a pore-forming step is carried out. The release sheet is not particularly limited, as long as it can be removed, while not causing damages upon the separator. For example, a polymer film made of a terephthalate material may be used. To obtain a separator including a heat resistant layer alone, the slurry is applied to a release sheet, followed by drying, and then the release sheet is removed. According to an embodiment of the present disclosure, the separator substrate layer may be a porous film substrate including a polyolefin-based polymer resin. Such a porous film substrate is not particularly limited, as long as it can be used as a substrate of a separator for an electrochemical device and has ion conductivity. In addition, according to an embodiment of the present disclosure, the separator substrate layer may be a shut-down layer that performs a shut-down function by blocking the pores, when the internal temperature of a battery is increased, and interrupting electrical communication between a positive electrode and a negative electrode. According to an embodiment of the present disclosure, when manufacturing a separator including the heat resistant layer and the shut-down layer, it is possible to obtain a composite separator including the heat resistant layer and the shut-down layer formed integrally with each other by applying the slurry to the surface of the shut-down layer, followed by drying.

The slurry may be applied by using a conventional coating process, such as Meyer bar coating, doctor blade coating, die coating, reverse roll coating, gravure coating, or the like. In the case of the composite separator, the slurry may be applied to both surfaces of the shut-down layer by coating the shut-down layer with the slurry through dip coating. In addition, the separator according to an embodiment of the present disclosure may be obtained by fabricating a heat resistant layer and a shut-down layer separately, stacking and laminating the sheets of the heat resistant layer and the shut-down layer, and forming a composite by using hot pressing or an adhesive.

According to the present disclosure, the pore-forming step may be carried out through humidified phase separation and/or dipping phase separation. According to an embodiment of the present disclosure, the pore-forming step is carried out through dipping phase separation. If necessary, humidified phase separation may be further carried out before the dipping phase separation. When a humidified phase separation is further carried out before the dipping phase separation, rapid exposure to a non-solvent is prevented, unlike dipping phase separation, thereby facilitating formation of smaller and more uniform pores. In addition, the rate of converting the ceramic precursor into a ceramic material may be controlled suitably. While the humidified phase separation and/or the dipping phase separation is carried out as mentioned above, pores may be formed in the heat resistant layer through the phase separation of the binder resin. In addition, the whole or at least a part of the ceramic precursor reacts with water so that it may be converted into a ceramic material through the humidified phase separation and/or the dipping phase separation.

As described above, according to an embodiment of the present disclosure, the pore-forming step may be carried out by performing the two-step phase separation process as described hereinafter.

First, the support coated with the slurry in the above-described step is allowed to stand under a humidified condition for a predetermined time to induce phase separation of the binder resin by humidification. According to an embodiment of the present disclosure, the humidified condition includes a relative humidity of 30-60% and a humidification exposure time of about 1-30 minutes. According to a preferred embodiment, the humidified phase separation may be carried out at a temperature of about 20-25°C.

Next, the resultant product obtained from the humidified phase separation is dipped in a non-solvent, allowed to stand therein, and then removed therefrom (dipping phase separation). The non-solvent may include water, low-molecular weight alcohols, such as isopropyl alcohol, methyl alcohol, ethyl alcohol, or the like, and at least one of them may be used. The dipping time may be 5 minutes or less, 3 minutes or less, or 1 minute or less, preferably. The non-solvent may be controlled to a temperature range of about 20-25°C.

Then, the resultant product obtained after the dipping phase separation is dried to remove the solvent and the non-solvent, thereby providing a separator. The drying may be carried out by natural drying or air blowing drying. To accelerate removal of the solvent or the non-solvent, the drying may be carried out under a warming condition.

According to an embodiment of the present disclosure, the resultant separator may be further subjected to UV irradiation or plasma treatment, if necessary.

The heat resistant layer obtained by the above-described method includes a ceramic material distributed homogeneously throughout the whole heat resistant layer, and thus it is possible to ensure the heat resistance of the separator. In addition, the heat resistant layer is provided with porous property through the phase separation of the binder resin, and thus it is possible to ensure a desired degree of electrolyte impregnatability and ion conductivity of the separator. In addition, since the inorganic material is not present in the form of particles but is derived from the ceramic precursor, there is no limitation in thickness resulting from particle size. Therefore, it is possible to provide the heat resistant layer in the form of a thin film with a thickness of several micrometers.

According to an embodiment of the present disclosure, the ceramic material may have Si-O binding in its chemical structure. For example, the ceramic material may be a silicate-based compound having Si-O binding in its chemical structure and derived from polysilazane through the following chemical Reaction Scheme 1.

[Reaction Scheme 1]

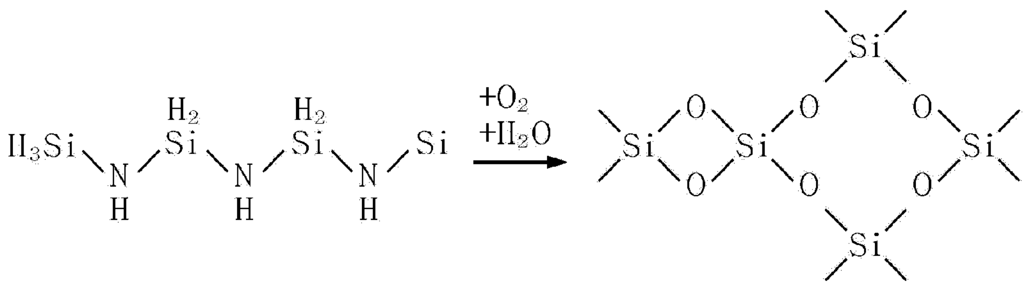


In addition, in the method for forming a heat resistant layer according to an embodiment of the present disclosure, phase separation of the binder resin and the conversion of a ceramic precursor into a ceramic material are accomplished at the same time through humidified phase separation and/or dipping phase separation, thereby providing high convenience of processing. Further, the ceramic precursor is converted into a ceramic material at room temperature, no heating device is required and a side reaction, such as thermal decomposition of the binder resin at high temperature, is prevented.

Meanwhile, according to an embodiment of the present disclosure, the shut-down layer prevents thermal runaway of a battery by allowing a thermoplastic resin to be molten so that the pores of the porous substrate may be blocked and ion conduction may be interrupted, when the battery temperature is increased. As a thermoplastic resin, a thermoplastic resin having a melting point less than 200°C is suitable, polyolefin being particularly preferred. In addition to polyolefin, the thermoplastic resin may include at least one polymer resin selected from polyethylene terephthalate, polybutylene terephthalate, polyacetal, polyamide, polycarbonate, polyimide, polyetherether ketone, polyether sulfone, polyphenylene oxide, polyphenylene sulfide and polyethylene naphthalene. The porous substrate includes a non-woven web, porous polymer film or a laminate thereof, but is not limited thereto. According to an embodiment of the present disclosure, the shut-down layer is not particularly limited, as long as it is a planar porous polymer thin film used for an electrochemical device. For example, an insulating thin film showing high ion permeability and mechanical strength and generally having a pore diameter of 10-100 nm and a thickness of 5-12 $\mu$m may be used. When the separator includes a heat resistant layer in combination with a polymeric thin film, it is possible to further impart flexibility by virtue of the polymeric thin film.

In another aspect of the present disclosure, there is provided a secondary battery including the separator. The battery includes a negative electrode, a positive electrode and a separator interposed between the negative electrode and the positive electrode. The separator is the above-described heat resistant separator.

According to the present disclosure, the positive electrode includes a positive electrode current collector, and a positive electrode active material layer formed on at least one surface of the current collector and including a positive electrode active material, a conductive material and a binder resin. Particular examples of the positive electrode active material may include any one selected from layered compounds such as lithium manganese composite oxide ($LiMn_2O_4$, $LiMnO_2$ etc.), lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as $LiV_3O_8$, $LiV_3O_4$, $V_2O_5$ or $Cu_2V_2O_7$; lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M = Co, Ni, Fe, Cr, Zn or Ta, and x = 0.01-0.1), $Li_2Mn_3MO_8$ (wherein M = Fe, Co, Ni, Cu or Zn), or $Li[Ni_xCo_yMn_z]O_2$ ($0 < x, y, z < 1, x + y + z = 1$); $LiMn_2O_4$ in which Li is partially substituted with an alkaline earth metal ion; disulfide compounds; and $Fe_2(MoO_4)_3$; or two or more of them.

According to the present disclosure, the negative electrode includes a negative electrode current collector, and a negative electrode active material layer formed on at least one surface of the current collector and including a negative electrode active material, a conductive material and a binder resin. Particular examples of the negative electrode active material may include any one selected from carbon such as non-graphitizable carbon, graphitic carbon, or the like; metal composite oxides such as $Li_xFe_2O_3(0 \leq x \leq 1)$, $Li_xWO_2(0 \leq x \leq 1)$, $Sn_xMe_{1-x}Me'_yO_z$ (Me: Mn, Fe, Pb or Ge; Me': Al, B, P, Si, an element of Group 1, Group 2 or Group 3 in the Periodic Table, or halogen; $0 < x \leq 1$; $1 \leq y \leq 3$; $1 \leq z \leq 8$); lithium metal; lithium alloys; silicon-based alloys; tin-based alloys; metal oxides such as SnO, $SnO_2$, PbO, $PbO_3$, $Pb_3O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, or the like; conductive polymers such as polyacetylene; Li-Co-Ni based materials; titanium oxide; and lithium titanium oxide, or a mixture of two or more of them.

According to an embodiment of the present disclosure, the conductive material may include any one selected from graphite, carbon black, carbon fibers or metallic fibers, metal powder, conductive whisker, conductive metal oxide, activated carbon and polyphenylene derivatives, or a mixture of two or more of them. More particularly, the conductive material may include any one selected from the group consisting of natural graphite, artificial graphite, Super-P, acetylene black, Ketjen black, channel black, furnace black, lamp black, thermal black, denka black, aluminum powder, nickel powder, zinc oxide, potassium titanate and titanium oxide, or a mixture of two or more of such conductive materials.

The current collector is not particularly limited, as long as it has high conductivity while not causing any chemical change in the corresponding battery. Particular examples of the current collector include stainless steel, copper, aluminum, nickel, titanium, baked carbon, or aluminum or stainless steel surface-treated with carbon, nickel, titanium, silver, or the like.

The binder resin may include a polymer used conventionally for an electrode in the art. Non-limiting examples of the binder resin include, but are not limited to: polyvinylidene fluoride-co-hexafluoropropylene, polyvinylidene fluoride-cotrichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or the like.

The electrode assembly obtained as described above is introduced to a suitable casing and an electrolyte is injected thereto to obtain a battery.

According to the present disclosure, the electrolyte is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone), ester compound or a mixture thereof. However, the present disclosure is not limited thereto.

In still another aspect of the present disclosure, there are provided a battery module which includes the battery including the electrode assembly as a unit cell, a battery pack including the battery module, and a device including the battery pack as a power source. Particular examples of the device may include, but are not limited to: power tools driven by an electric motor; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Examples 1-3**

A precursor solution containing 20 wt% of polysilazane (solvent: dibutyl ether, AZ Electronic Material, NL-110) was prepared. Next, PVdF-HFP (Mw 800,000, HFP content 5 wt%) was introduced to and mixed with DMF to prepare a polymer solution. The precursor solution was introduced to and mixed with the polymer solution to prepare slurry for a heat resistant layer. The solid content of the slurry, except the solvent, was about 20 wt%. In addition, the ratio of the content of polysilazane to that of PVdF-HFP in the slurry according to each of Examples and Comparative Examples is shown in the following Table 1. Then, the prepared slurry was applied to one surface of a porous thin film (thickness 9 $\mu$m, porosity 45%) made of polyethylene through bar coating. The resultant structure was exposed to a humidified condition with a relative humidity of 40% for about 10 minutes. Herein, the temperature of the humidified condition was about 23°C. After that, the resultant structure was dipped in water at 25°C for about 30 seconds. Then, hot air drying was carried out by using a 100°C heat-gun to obtain a separator.

**Example 4**

A precursor solution containing 20 wt% of polysilazane (solvent: dibutyl ether, AZ Electronic Material, NL-110) was prepared. Next, PVdF-HFP (Mw 800,000, HFP content 5 wt%) was introduced to and mixed with DMF to prepare a polymer solution. The precursor solution was introduced to and mixed with the polymer solution to prepare slurry for a heat resistant layer. The solid content of the slurry, except the solvent, was about 20 wt%. In addition, the ratio of the content of polysilazane to that of PVdF-HFP in the slurry according to each of Examples and Comparative Examples is shown in the following Table 1. Then, the prepared slurry was applied to one surface of a release film made of PET

through bar coating. The resultant structure was exposed to a humidified condition with a relative humidity of 40% for about 10 minutes. Herein, the temperature of the humidified condition was about 23°C. After that, the resultant structure was dipped in water at 25°C for about 30 seconds. Then, hot air drying was carried out by using a 100°C heat-gun to obtain a separator.

**Comparative Example 1**

First, PVdF-HFP (Mw 800,000, HFP content 5 wt%) was introduced to and mixed with DMF to prepare a polymer solution. Next, the polymer solution was applied to one surface of a porous thin film (thickness 9 μm, porosity 45%) made of polyethylene through bar coating. The resultant structure was exposed to a humidified condition with a relative humidity of 40% for about 10 minutes. Herein, the temperature of the humidified condition was about 23°C. Then, the resultant structure was dipped in water at 25°C for about 30 seconds. Then, hot air drying was carried out by using a 100°C heat-gun to obtain a separator.

**Comparative Example 2**

First, a precursor solution containing 20 wt% of polysilazane (solvent: dibutyl ether, AZ Electronic Material, NL-110) was prepared. Next, the precursor solution was applied to one surface of a porous thin film (thickness 9 μm, porosity 45%) made of polyethylene through bar coating. The resultant structure was exposed to a humidified condition with a relative humidity of 40% for about 10 minutes. Herein, the temperature of the humidified condition was about 23°C. Then, the resultant structure was dipped in water at 25°C for about 30 seconds. Then, hot air drying was carried out by using a 100°C heat-gun to obtain a separator.

**Comparative Examples 3**

A precursor solution containing 20 wt% of polysilazane (solvent: dibutyl ether, AZ Electronic Material, NL-110) was prepared. Next, PVdF-HFP (Mw 800,000, HFP content 5 wt%) was introduced to and mixed with DMF to prepare a polymer solution. The precursor solution was introduced to and mixed with the polymer solution to prepare slurry for a heat resistant layer. The solid content of the slurry, except the solvent, was about 20 wt%. In addition, the ratio of the content of polysilazane to that of PVdF-HFP in the slurry according to each of Examples and Comparative Examples is shown in the following Table 1. Then, the prepared slurry was applied to one surface of a porous thin film (thickness 9 μm, porosity 45%) made of polyethylene through bar coating. The resultant structure was subjected to hot air drying by using a 100°C heat-gun at 23°C to remove the solvent, thereby providing a separator.

**Comparative Example 4**

First, PVdF-HFP (Mw 800,000, HFP content 5 wt%) was introduced to and mixed with DMF to prepare a polymer solution. Next, the polymer solution was applied to one surface of a release film made of PET through bar coating. The resultant structure was exposed to a humidified condition with a relative humidity of 40% for about 10 minutes. Herein, the temperature of the humidified condition was about 23°C. Then, the resultant structure was dipped in water at 25°C for about 30 seconds. Then, hot air drying was carried out by using a 100°C heat-gun to obtain a separator.

**Comparative Examples 5**

A precursor solution containing 20 wt% of polysilazane (solvent: dibutyl ether, AZ Electronic Material, NL-110) was prepared. Next, PVdF-HFP (Mw 800,000, HFP content 5 wt%) was introduced to and mixed with DMF to prepare a polymer solution. The precursor solution was introduced to and mixed with the polymer solution to prepare slurry for a heat resistant layer. The solid content of the slurry, except the solvent, was about 20 wt%. In addition, the ratio of the content of polysilazane to that of PVdF-HFP in the slurry according to each of Examples and Comparative Examples is shown in the following Table 1. Then, the prepared slurry was applied to one surface of a release film made of PET through bar coating. The resultant structure was subjected to hot air drying by using a 100°C heat-gun at 23°C to remove the solvent, thereby providing a separator.

**Comparative Example 6**

First, $SiO_2$ (particle diameter 500 nm) and polyvinylidene fluoride-hexafluoropropylene (PVdF-HFP, weight average molecular weight 800,000, HFP content 5 wt%) were introduced to dimethyl formamide (DMF) as a solvent at a weight ratio of 50:50, and the mixture was agitated to dissolve PVdF-HFP completely. Next, zirconium oxide beads

were added thereto and dispersed therein by using a shaker for 3 hours to prepare a coating solution. The coating solution had a solid content of 20%. Then, the prepared slurry was applied to one surface of a porous thin film (thickness 9 μm, porosity 45%) made of polyethylene through bar coating. The resultant structure was exposed to a humidified condition with a relative humidity of 40% for about 10 minutes. Herein, the temperature of the humidified condition was about 23°C. Then, the resultant structure was dipped in water at 25°C for about 30 seconds. Then, hot air drying was carried out by using a 100°C heat-gun to obtain a separator.

[Table 1]

| | Content of ceramic precursor[1]) | Use of substrate film | Thickness of separator (μm) | Electrical resistance (ohm) | Heat shrinkage (%) 150°C, 30 min. (MD/TD) | Remark |
|---|---|---|---|---|---|---|
| Ex. 1 | 25 wt% | Yes | 13.1 | 0.98 | 37/36 | |
| Ex. 2 | 50 wt% | Yes | 12.9 | 0.81 | 28/28 | |
| Ex. 3 | 75 wt% | Yes | 12.7 | 0.88 | 19/17 | |
| Ex. 4 | 50 wt% | No | 20.7 | 1.4 | 5/4 | |
| Comp. Ex. 1 | 0 | Yes | 12.7 | 1.31 | 56/54 | |
| Comp. Ex. 2 | 100 wt% | Yes | 13 | - | - | Resistance cannot be measured, since no porous structure is formed |
| Comp. Ex. 3 | 50 wt% | Yes | 12.1 | 2.12 | 35/34 | |
| Comp. Ex. 4 | 0 | No | 20.9 | Not available | 25/23 | Insulation property cannot be ensured |
| Comp. Ex. 5 | 50 wt% | No | 20.5 | Not available | 19/18 | Resistance cannot be measured, since no porous structure is formed |
| Comp. Ex. 6 | 50 wt% ($SiO_2$ particles are used instead of ceramic precursor) | Yes | 13 | 1.2 | 36/36 | |

[1]) Weight percent based on 100 wt% of the combined weight of the ceramic precursor and the binder resin

As can be seen from Table 1, each of the separators according to Examples 1-4 includes a ceramic material derived from a ceramic precursor in its heat resistant layer, and thus shows excellent heat shrinkage and electrical resistance characteristics. FIG. 1 illustrates a scanning electron microscopic (SEM) image of the surface of the separator according to Example 1. As can be seen from FIG. 1, spherical ceramic particles are formed on the surface of the separator. In addition, FIG. 2 and FIG. 3 illustrate the results of energy dispersive spectrometry (EDS) of the separator according to Example 1. Herein, no nitrogen (N) is observed in the ceramic precursor. Therefore, it can be seen that the ceramic precursor in the separator according to an embodiment of the present disclosure is converted into a ceramic material. The separator according to Comparative Example 1 includes a heat resistant layer formed by using a binder resin alone on the surface of the separator substrate, without using any ceramic precursor. It can be seen that the separator according to Comparative Example 1 shows high resistance and particularly high heat shrinkage to cause degradation of heat resistance. The separator according to Comparative Example 4 includes a heat resistant layer formed by using a binder resin alone without using any separator substrate, and shows high resistance and high heat shrinkage. In the case of the separator according to Comparative Example 2, since only the ceramic precursor is present, the heat resistant layer is cracked and the separator hardly functions as a separator. In Comparative Examples 3 and

5, the ceramic precursor cannot be converted into a ceramic material and a porous structure cannot be formed properly, and thus each separator shows high resistance. Meanwhile, the separator according to Comparative Example 6 is obtained by using the same amount of ceramic particles instead of a ceramic precursor. It can be seen that the separator according to Comparative Example 6 shows poor resistance characteristics as compared to the separators according to Examples 1-3 having a similar separator thickness.

**Method for Determination of Resistance**

Each of the separators according to Examples and Comparative Examples was determined for resistance by the following method. Each of the separators according to Examples and Comparative Examples was cut and disposed in 2032 Coin Cell available from Hoshen Co., an electrolyte including 1M $LiPF_6$-ethylene carbonate/ethyl methyl carbonate (weight ratio 3:7) was injected thereto so that the separator might be impregnated therewith, and electrical resistance was determined by EIS (Electrochemical Impedance Spectroscopy) at 25°C through alternating current measurement.

**Method for Determination of Shrinkage**

Each of the separator samples according to Examples and Comparative Examples was cut into a size of 50 mm (length) x 50 mm (width) to prepare a specimen. The specimen was allowed to stand in an oven heated to 150°C for 30 minutes. Then, the specimen was recovered and a change in length was measured in the machine direction (MD) and transverse direction (TD).

Shrinkage (%) = {(Length before shrinking – Length after shrinking)/Length before shrinking} x 100

**Claims**

1. A method for manufacturing a separator for an electrochemical device comprising a heat resistant layer,

   wherein the heat resistant layer is formed by applying slurry containing a ceramic precursor and a binder resin to at least one surface of a support member, followed by drying, and
   a pore forming process comprising at least one step selected from a step of allowing the support member coated with the slurry to stand under a humidified condition and a step of dipping the support member coated with the slurry in a non-solvent is carried out, before drying.

2. The method for manufacturing a separator for an electrochemical device according to claim 1, wherein the ceramic precursor comprises at least one selected from polysilazane, polycarbosilane, polysiloxane, aluminum amide, polyborazine and polytitanium imide.

3. The method for manufacturing a separator for an electrochemical device according to claim 1, wherein the ceramic precursor comprises polysilazane, and the polysilazane comprises at least one compound represented by the following Chemical Formula 1:

[Chemical Formula 1]

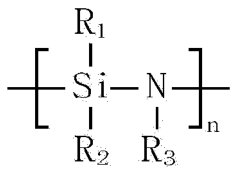

wherein each of Ri, $R_2$ and $R_3$ independently represents hydrogen, an alkyl group, alkenyl group, cycloalkyl group, aryl group, alkylsilyl group, alkylamino group, alkoxy group or a halogen.

4. The method for manufacturing a separator for an electrochemical device according to claim 1, wherein the binder resin comprises a polyvinylidene fluoride-based polymer resin containing vinylidene fluoride as a polymerization unit.

5. The method for manufacturing a separator for an electrochemical device according to claim 1, wherein the slurry is prepared by preparing a polymer solution containing a binder resin and a precursor solution containing a ceramic precursor separately, and mixing the polymer solution and the precursor solution with each other.

6. The method for manufacturing a separator for an electrochemical device according to claim 4, wherein the polyvinylidene fluoride-based polymer resin has a weight average molecular weight of 300,000-1,500,000.

7. The method for manufacturing a separator for an electrochemical device according to claim 4, wherein the polyvinylidene fluoride-based polymer resin comprises a copolymer of vinylidene fluoride with a copolymerizable monomer, and the copolymer has a substitution degree with the monomer of 1-30 wt%.

8. The method for manufacturing a separator for an electrochemical device according to claim 1, wherein the content of the ceramic precursor in the slurry is 10-85 wt% based on 100 wt% of the combined weight of the ceramic precursor and the binder resin.

9. The method for manufacturing a separator for an electrochemical device according to claim 1, wherein the step of allowing the support member coated with the slurry to stand under a humidified condition is carried out under a relative humidity of 30-60%.

10. The method for manufacturing a separator for an electrochemical device according to claim 1, wherein the non-solvent comprises at least one selected from water, isopropyl alcohol, methyl alcohol and ethyl alcohol.

11. The method for manufacturing a separator for an electrochemical device according to claim 1, wherein the separator is further subjected to an additional step, such as a UV irradiation step and/or a plasma treatment step, after drying.

12. A separator for an electrochemical device comprising a heat resistant layer, wherein the heat resistant layer comprises a mixture of a ceramic material with a binder resin, the ceramic material is derived from a ceramic precursor, and the ceramic precursor includes polysilazane.

FIG. 1

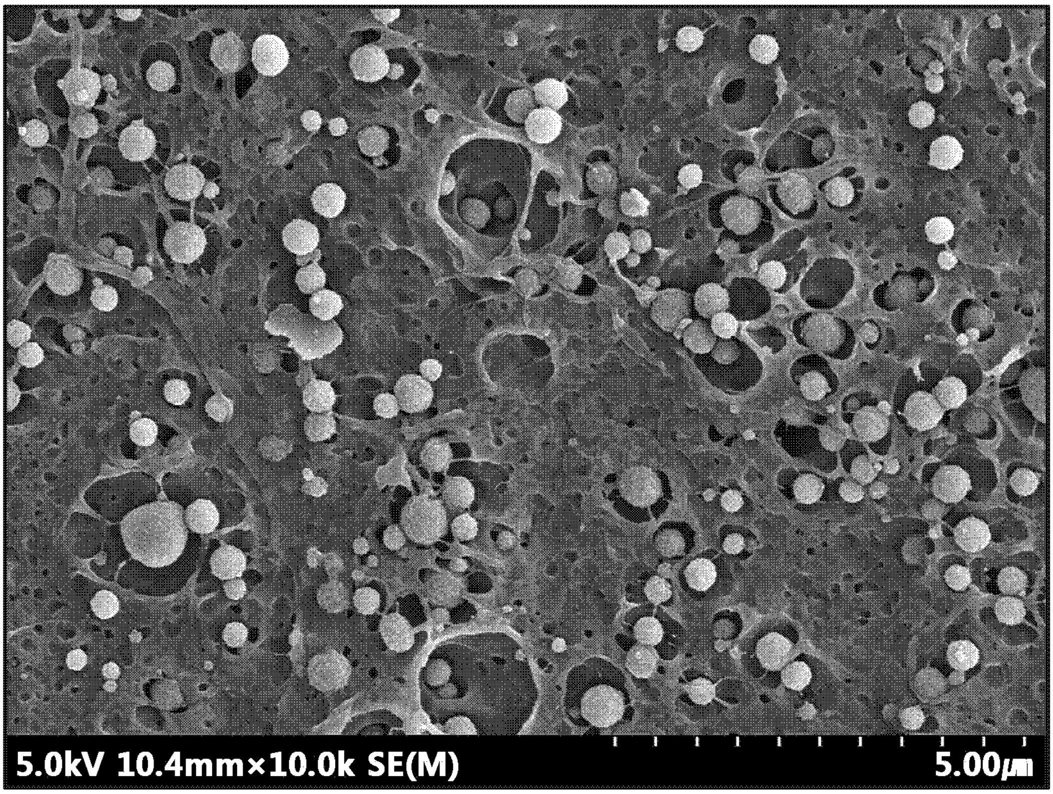

FIG. 2

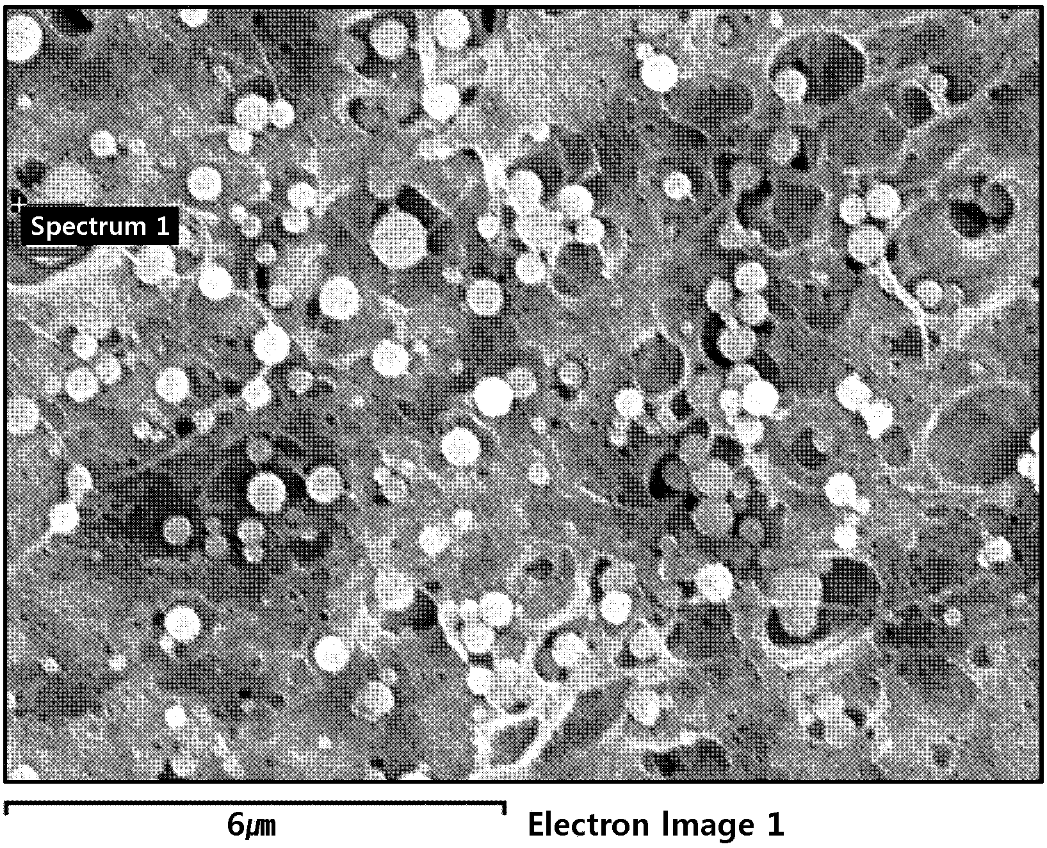
Spectrum 1
6μm
Electron Image 1

FIG. 3

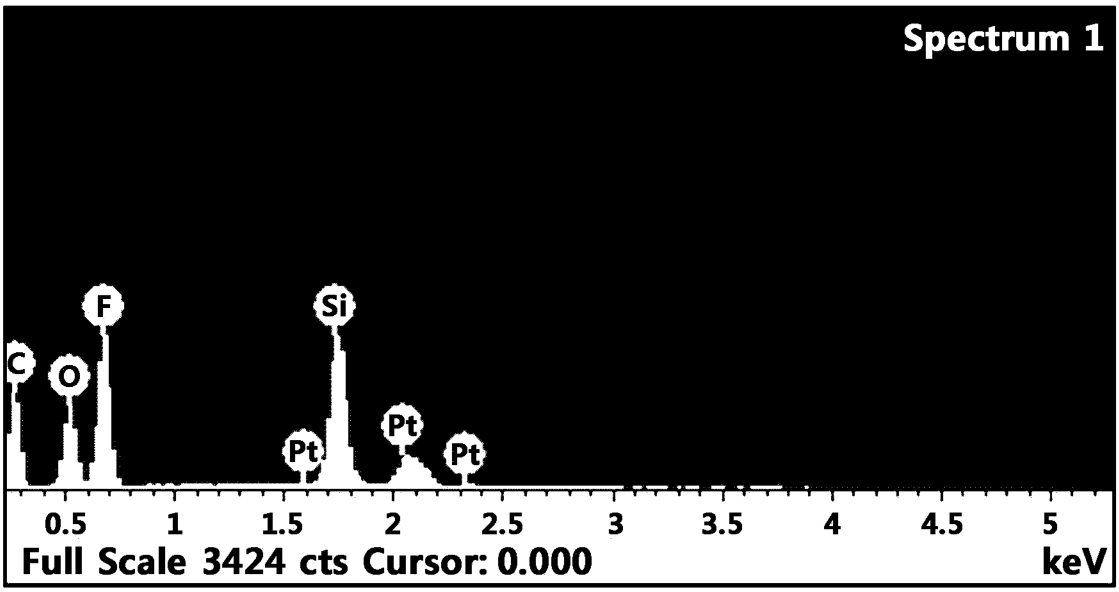
Spectrum 1
C
O
F
Pt
Si
Pt
Pt
0.5
1
1.5
2
2.5
3
3.5
4
4.5
5
Full Scale 3424 cts Cursor: 0.000
keV

**INTERNATIONAL SEARCH REPORT**

International application No.
**PCT/KR2020/010922**

**A. CLASSIFICATION OF SUBJECT MATTER**

**H01M 2/14**(2006.01)i; **H01M 2/16**(2006.01)i; **H01M 10/42**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 2/14; B05D 7/04; B05D 7/24; H01G 11/52; H01M 10/052; H01M 2/16; H01M 10/42

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 바인더(binder), 폴리비닐리덴(PVDF), 폴리실라잔 (polysilazane), 세라믹 전구체(ceramic precursor)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 2018-0337379 A1 (CORNELL UNIVERSITY) 22 November 2018. See claims 1, 10, 16, 18 and 20; and paragraphs [0022], [0062], [0133] and [0134]. | 12<br>1-11 |
| Y | KR 10-2019-0086253 A (SAMSUNG SDI CO., LTD.) 22 July 2019. See claims 11 and 12; and paragraph [0070]. | 1-11 |
| Y | KR 10-2019-0092307 A (LG CHEM, LTD.) 07 August 2019. See claim 1. | 7 |
| Y | JP 3771314 B2 (TONEN CORP.) 26 April 2006. See paragraph [0033]. | 9 |

✓ Further documents are listed in the continuation of Box C. ✓ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 November 2020** | **25 November 2020** |

| Name and mailing address of the ISA/KR | Authorized officer |
|---|---|
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2020/010922**

**C. DOCUMENTS CONSIDERED TO BE RELEVANT**

| Category* | Citation of document, with indication, where appropriate, of the relevant passages | Relevant to claim No. |
|---|---|---|
| Y | KR 10-2016-0071539 A (SAMSUNG SDI CO., LTD.) 22 June 2016. See claim 1; and paragraph [0075]. | 11 |

Form PCT/ISA/210 (second sheet) (July 2019)

**INTERNATIONAL SEARCH REPORT**
**Information on patent family members**

International application No.
**PCT/KR2020/010922**

| Patent document cited in search report | Publication date (day/month/year) | Patent family member(s) | Publication date (day/month/year) |
|---|---|---|---|
| US 2018-0337379 A1 | 22 November 2018 | US 10355257 B2 | 16 July 2019 |
| | | US 2019-288258 A1 | 19 September 2019 |
| | | WO 2018-213484 A1 | 22 November 2018 |
| KR 10-2019-0086253 A | 22 July 2019 | None | |
| KR 10-2019-0092307 A | 07 August 2019 | None | |
| JP 3771314 B2 | 26 April 2006 | JP 09-019658 A | 21 January 1997 |
| KR 10-2016-0071539 A | 22 June 2016 | None | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190100504